(19)

Europäisches
Patentamt
European
Patent Office
Office européen
des brevets

(11) **EP 1 873 657 A1**

(12) **EUROPEAN PATENT APPLICATION**

(43) Date of publication:
**02.01.2008 Bulletin 2008/01**

(51) Int Cl.:
***G06F 17/30*** *(2006.01)*

(21) Application number: **06291086.4**

(22) Date of filing: **29.06.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **France Télécom
75015 Paris (FR)**

(72) Inventor: **Iguchi, Makoto,
France Telecom R&D Japon
Tokyo 160-0022 (JP)**

(54) **User-profile based web page recommendation system and method**

(57)     A web page recommendation system includes a browsing history database which contains information related to the web pages that a user browsed; a stability score calculating part which calculates stability scores that represent the stability of the user's web page browsing tendencies, based on the information in the browsing history database; a recommendation strategy decision part which decides a recommendation strategy based on a calculated stability score; and a recommendation part which uses the decided recommendation strategy in order to recommend web pages to the user.

# FIG. 4

EP 1 873 657 A1

**Description**

TECHNICAL FIELD

The present invention relates to the field of web page retrieval and recommendation. More particularly, the present invention relates to a web page recommendation system which learns a preference of a user's web page browsing as a user profile, and use of the user profile to make a web page recommendation.

BACKGROUND ART

In recent years, it has been become more and more important for web users to easily reach appropriate web pages. There exist a lot of attempts, both academic and commercial, to acquire a user's web preference by analyzing keywords included in web pages. (Probably the most famous of all are the services provided by Google™, like Google AdSense™). The prior art analyzes the text in the web pages browsed by users, chops the text into keywords, and statistically counts these keywords to generate user profiles. Once such user profiles are created, they are used to make web page recommendations for the corresponding users.

The prior art can be categorized into two approaches, namely content-based filtering and collaborative filtering. The content-based filtering approach uses the profiles to select the most appropriate web pages (say, from the set of the newly updated pages) and recommend them to the users. The collaborative filtering approach uses the profiles to find the most similar users having similar profiles, and recommend the pages browsed by them (the method is like "users who buy this, also buy that" in amazon.com). For example, the patent applications EP 1 524 611 A2 and CA 2 265 292 are some examples of such prior art.

Although many researchers have tried to improve their web page recommendation techniques, they do not realize that the most suitable recommendation strategy differs from one user to another. For example, in the case where two users exist, user X and Y, having the same user profiles (exhibiting strong correlation with the words "French" and "dinner"). The appropriate recommendation strategy for user X and Y may differ even though their user profiles are identical. If user X is a chef apprentice trying to learn the secrets of cooking for example, the best strategy is to use the content-based filtering approach because user X's interest should be extremely focused on "French dinner", and nothing else. However, if user Y is a casual gourmet searching for some nice restaurants, the appropriate recommendation method is probably the collaborative filtering approach which provides a broader recommendation than content-based filtering. For instance, the adjacent info like "Italian restaurant visited by other people who also exhibit interest in the words 'French' and 'dinner'" are probably welcomed by user Y. These types of adjacent information can be extracted with the collaborative-filtering, but can hardly be extracted with the content-based filtering approach.

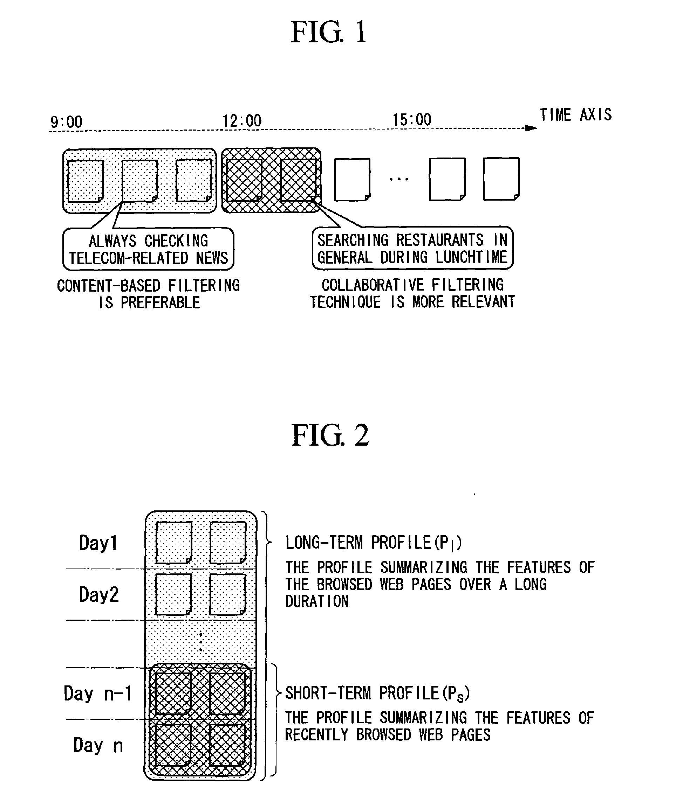

Also, the suitable recommendation methods may vary for a single user depending on time. For example, user Z may be browsing some concrete topics (e.g. telecom-related news) in the morning, and searching some neighbourhood restaurant information during lunchtime (Figure 1). Even though we are dealing with the same person, the content-based filtering approach is probably suitable in the morning (since the user should be really focused on the subject), whereas the collaborative filtering approach is probably suitable at lunchtime (since the approach will allow more flexibility in the recommendation page candidates). This kind of profile drift (in terms of profile preference and profile consistency) is not considered in the prior art. Similar discussion holds true in the situation where one PC is shared among multiple members (e.g. family members).

DISCLOSURE OF INVENTION

In order to solve the above-mentioned problems and to recommend more appropriate web pages to a user, the web page recommendation system according to the present invention comprises a browsing history database which contains information related to the web pages that a user browsed; a stability score calculating part which calculates stability scores that represent the stability of the user's web page browsing tendencies, based on the information in the browsing history database; a recommendation strategy decision part which decides a recommendation strategy based on a calculated stability score; and a recommendation part which uses the decided recommendation strategy in order to recommend web pages to the user.

By this constitution, the web page recommendation system can use a different recommendation strategy depending on whether or not the browsing tendency to web pages of a user is stable based on the user's web page browsing history. Thus, compared to the prior art, more appropriate web pages can be recommended using a more appropriate recommendation strategy.

It is to be understood that the reference numerals appended in the claims do not limit the interpretation of the claims.

BRIEF DESCRIPTION OF THE DRAWINGS

Figure 1 shows a change in user web browse preference.
Figure 2 shows a relationship between a long-term profile and a short-term profile.
Figure 3 shows long-term and short-term profiles with time slots.
Figure 4 is an overview of the entire system of an embodiment of the present invention.
Figure 5 is a function block diagram of the system.
Figure 6 is a function block diagram showing a hardware configuration of the system.
Figure 7 is a data structure of a browsing history table.
Figure 8 is a data structure of a long-term profile table.
Figure 9 is a data structure of a short-term profile table.
Figure 10 is a data structure of a configuration table.
Figure 11 is a flowchart of a user profile update procedure.
Figure 12 is a flowchart of a recommendation strategy decision procedure.
Figure 13 is a function block diagram showing a collaboration of multiple management agents.

BEST MODE FOR CARRYING OUT THE INVENTION

The presented invention is aimed at solving the problem of "selecting the appropriate recommendation strategy (content-base or collaborative filtering)". The core idea is to track two types of user profiles, a long-term profile and a short-term profile, for each user, and to measure the stability of the user's preference by comparing these two profiles (Figure 2).

The long-term and short-term profiles are constructed so as to represent the corresponding user's web browsing trends over a long duration and a short duration, respectively. For example, whereas the long-term profile may be constructed in a way that it summarizes the preferences of the user's web browsing trends in the last 1 week, the short-term profile may be constructed to express the user's browsing preferences in last 2 days.

The stability of user preference is calculated by measuring the similarity of the long-term and short-term profiles. The actual web page recommendation strategy is decided according to this profile stability. For example:

- If two profiles exhibit highly similar preferences, then we consider the user profile as stable and choose the content-based filtering approach. For example, user X (a chef apprentice) is expected to have stable profiles, since he is almost always browsing pages containing the terms "French dinner".
- If two profiles exhibit medium-high similarity, then we consider the user profile as fairly stable and choose the collaborative filtering approach. For example, when we look at user Y (a casual gourmet), chances are that his long-term and short-term profiles are somewhat similar. He will be browsing a lot of restaurant-related pages (advertisements, recommendation pages, and so on), but with type diversity (e.g. French, Italian, Japanese, and so forth).
- If two profiles are not similar at all, then we consider the user profile as not stable and decide not to recommend any web pages.

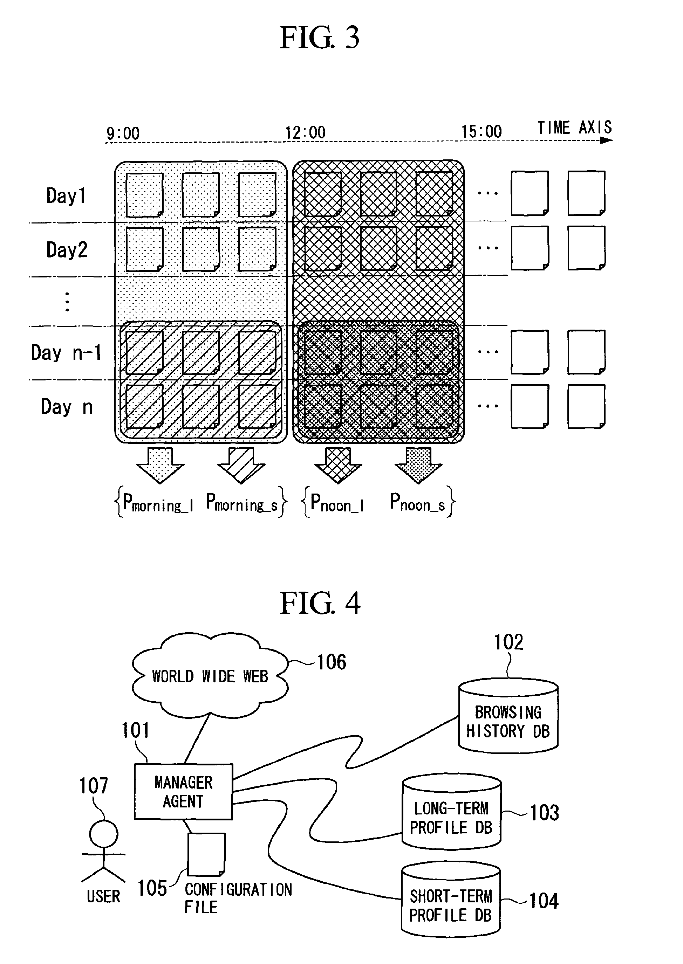

The idea of the long-term and short-term profile generation can be further extended with the concept of time slotting; for each time slot, one long-term profile and one short-term profile can be defined. In Figure 3 for example, two different sets of long-term and short-term profiles are made for the timeslot "morning" and "noon", respectively. A set of $P_{morning\_l}$ and $P_{morning\_s}$ represent the user's web browsing preferences in the morning (9:00-12:00), and a set of $P_{noon\_1}$ and $P_{noon\_s}$ represent the user's web browsing preferences at noon (12:00-15:00). Going back to the previous example, user Z will have a highly stable user profile in the morning (i.e. his $P_{morning\_l}$ and $P_{moning\_s}$ will exhibit high similarity), but his profile will show lower stability at lunchtime (i.e. his $P_{noon\_l}$ and $P_{noon\_s}$ will exhibit medium-high similarity). Using such knowledge, the present invention can select the appropriate recommendation strategy on a time basis.

[First Embodiment]

The system implementing the present invention is shown in Figure 4. The system includes a management agent 101, a browsing history database 102, a long-term profile database 103, a short-term profile database 104, and a configuration file 105. The agent 101 is connected to the World Wide Web (WWW) 106. The WWW 106 comprises web servers connected to the Internet. When a user 107 browses web pages, they are captured by the agent 101. The agent 101 keeps track of all web pages browsed by the user 107 with the browsing history database 102, and at the same time analyzes the web browse preferences of the user 106 and stores the results in the long-term profile database 103 and the short-term profile database 104. The configuration file 105 is consulted by the agent 101 when the agent 101 is to select a web page recommendation strategy based on the user preferences stored in the long-term profile database 103 and the short-term profile database 104.

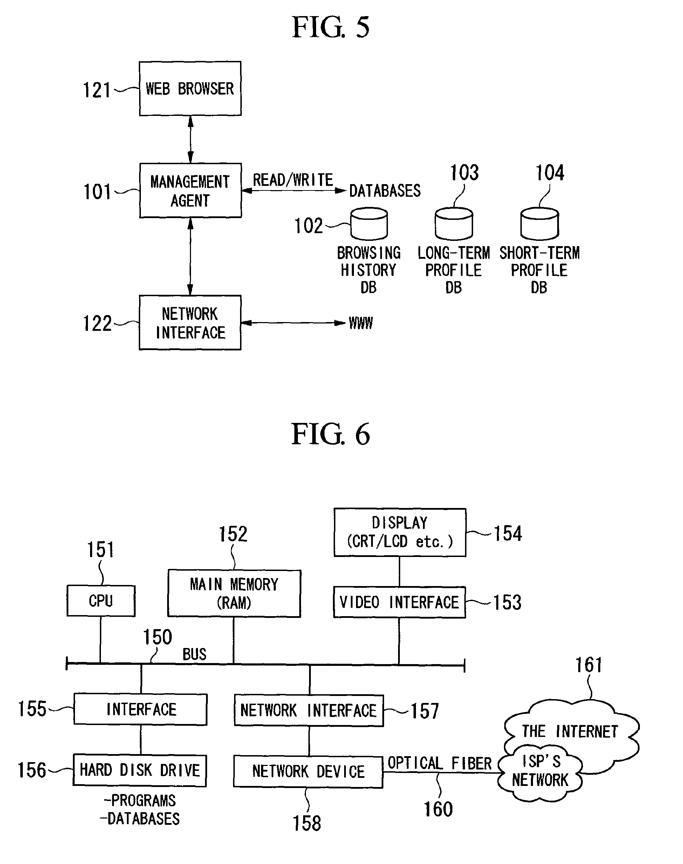

Figure 5 shows how the management agent 101 works in a user's local client machine (e.g. a personal computer, a PDA, or a mobile phone terminal). When the user accesses the WWW 106 using a function of a web browser 121, content is sent to the client machine from the WWW 106 side via a network. When a network interface 122 receives the content and passes the same to the web browser 121, the management agent 101 captures this and analyzes the contents thereof. Also, the management agent 101 writes necessary information to the browsing history database 102, the long-term profile database 103, and the short-term profile database 104 as well as reads necessary information from these databases.

Figure 6 shows a hardware configuration of the client machine which implements the management agent 101. The client machine has a bus 150. A CPU 151, a main memory (RAM) 152, a video interface 153, an interface 155, and a network interface 157 are connected to the bus 150. The video interface 153 is connected to a display 154. Thus, the display 154 can carry out signal exchange with the other components of the system via the bus 150. As the display 154, a cathode ray tube (CRT) display, liquid crystal display (LCD), or the like is used for example. The interface 155 is connected to a hard disk drive (HDD) 156. Thus, the hard disk drive 156 can carry out signal exchange with the other components of the system via the bus 150. The network interface 157 is connected to a network device 158. As the network device 158, an optical modem is used for example. The network device 158 is further connected to an optical fiber 160 via an ISP's (Internet Service Provider's) network. Thus, the client machine can carry out communication with another device via the Internet 161.

The data constituting the browsing history database 102, the long-term profile database 103, and the short-term profile database 104 are recorded in the HDD 156. Also, the configuration file 105 is recorded in the HDD 156. Furthermore, program files are recorded in the HDD 156. One of the program files is a computer program having the function of the management agent 101. This program is read from hard disk drive 156 at the necessary time, stored in the main memory 152, and further, written to a sequential CPU 151.

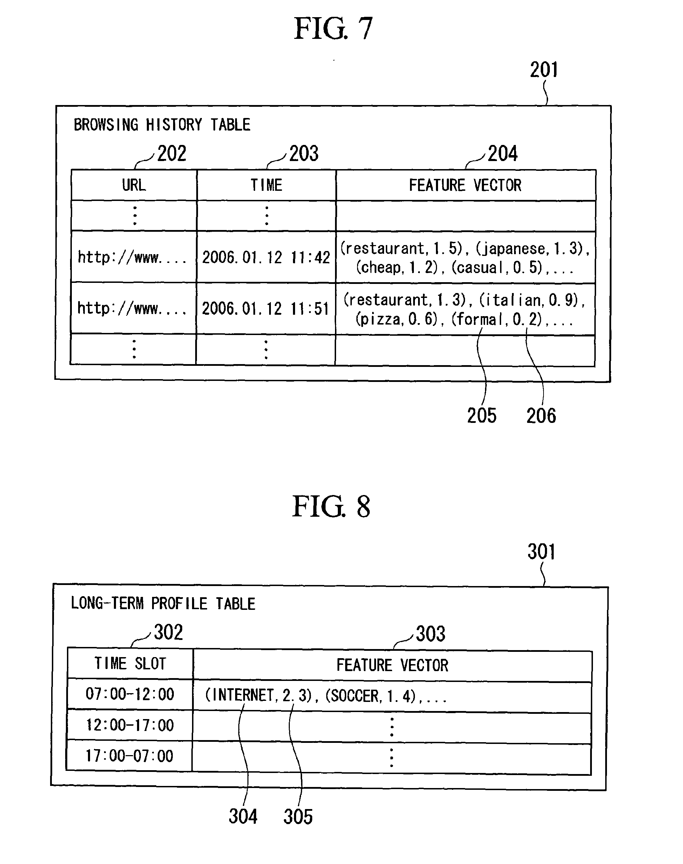

Figure 7 shows a data structure of a browsing history table 201 stored in the browsing history database 102. A row of the browsing history table 201 represents a record of a web page browsed; each record is composed of a URL 202, a time 203, and a feature vector 204. The feature vector 204 is composed of one or more pairs of a keyword 205 and a score 206. The URL 202 in each row identifies the web page browsed by the user.

The URL 202 and the time 203 represent where and when the corresponding web page was extracted from the WWW 106. The feature vector 204 is the summarization of the corresponding web page. The vector is formulated in such a manner that the keyword 205 with a high score 206 represents the characteristics of the corresponding web pages better than the keyword 205 with a low score 206. For example, regarding the feature vector 204 of the second row in Figure 7, we can see that the characteristics of the corresponding web page contents is best described with the keyword "restaurant" (with a score of 1.5), followed by the keyword "Japanese" (with a score of 1.3), and so on.

Figure 8 shows a data structure of a user profile table 301 stored in the long-term profile database 103. A row of the user profile table 301 represents a long-term user profile record; each record is composed of a time slot 302 and a feature vector 303. The feature vector 303 is composed of one or more pairs of a keyword 304 and a score 305.

The time slot 302 represents the time when the corresponding long-term user profile record is valid. The first record in Figure 8, for example, has the time slot "07:00-12:00", so this user profile record is to be used when the system wants to know the user's browsing tendency over a long duration for the time slot 07:00-12:00. Please note that to simplify the description there are only three time slots in Figure 8, but it is possible to assign more time slots to further partition the user profile (e.g. one time slot for every 2 hours or less).

The feature vector 303 is an actual representation of the corresponding user's preference in the long-term. The pair of the keyword 304 and the score 305 are the summarization of the corresponding user's preference. The feature vector 303 is formulated in such a manner that the keyword 304 with a high score 305 represents the long-term trends of the corresponding user 107 at the corresponding timeslot better than the keyword 304 with a low score 306. For example, regarding the first row in Figure 8, we can see that the long-term browsing trends of the corresponding user in the time slot 07:00-12:00 is best described with the keyword "Internet" (with a score of 2.3), followed by the keyword "soccer" (with a score of 1.4), and so on.

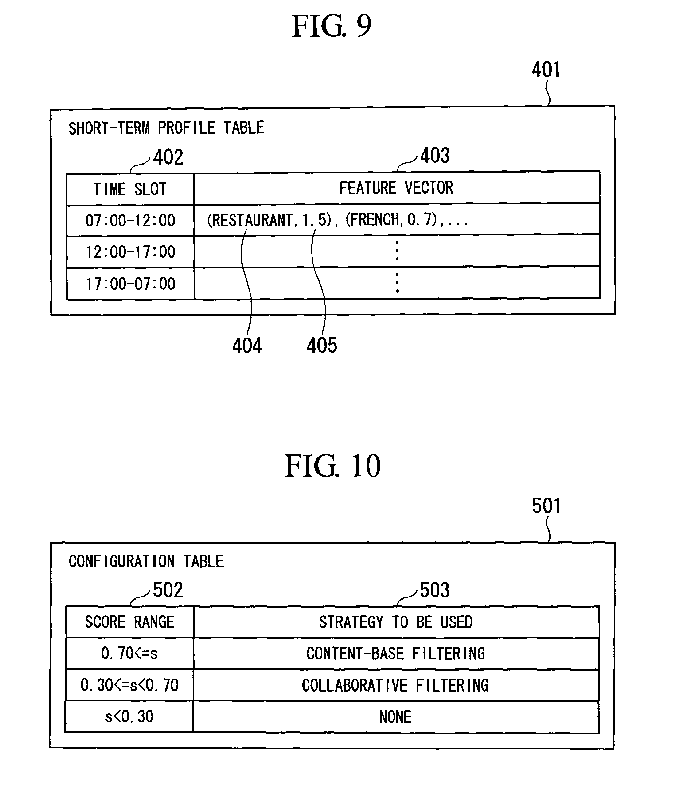

Figure 9 shows a data structure of a user profile table 401 stored in the short-term profile database 104. A row of the user profile table 401 represents a short-term user profile record; each record is composed of a time slot 402 and a feature vector 403. The feature vector 403 is composed of one or more pairs of a keyword 404 and a score 405.

The timeslot 402 represents the time when the corresponding short-term user profile record is valid. The first record in Figure 9, for example, has the time slot "07:00-12:00", so this user profile record is to be used when the system wants to know the user's browsing tendency over a short duration for the timeslot 07:00-12:00. Please note that to simplify the description there are only three time slots in Figure 9, but it is possible to assign more time slots to further partition the user profile (e.g. one timeslot for every 2 hours).

The feature vector 403 is an actual representation of the corresponding user's preference in the short-term. The pair of the keyword 404 and the score 405 are the summarization of the corresponding user's preference. The feature vector 403 is formulated in such a manner that the keyword 404 with a high score 405 represents the short-term trends of the corresponding user 107 at the corresponding timeslot better than the keyword 404 with a low score 405. For example, regarding the first row in Figure 9, we can see that the long-term browsing trends of the corresponding user in the timeslot 07:00-12:00 is best described with the keyword "Restaurant" (with a score of 1.5), followed by the keyword "French" (with a score of 0.7), and so on.

Figure 10 shows a configuration table 501 stored in the configuration file 105. The configuration table 501 includes a score range condition 502 and a strategy definition 503. The score range condition 502, together with the strategy definition 503, defines the strategy the management agent 101 should take when the management agent 101 is to make a web page recommendation for the user 107. For example, the second row in Figure 7 states that the collaborative filtering recommendation strategy should be taken if the stability score of the user profile is in the range of 0.30-0.70. The actual calculation procedures of the user profile stability score will be defined later.

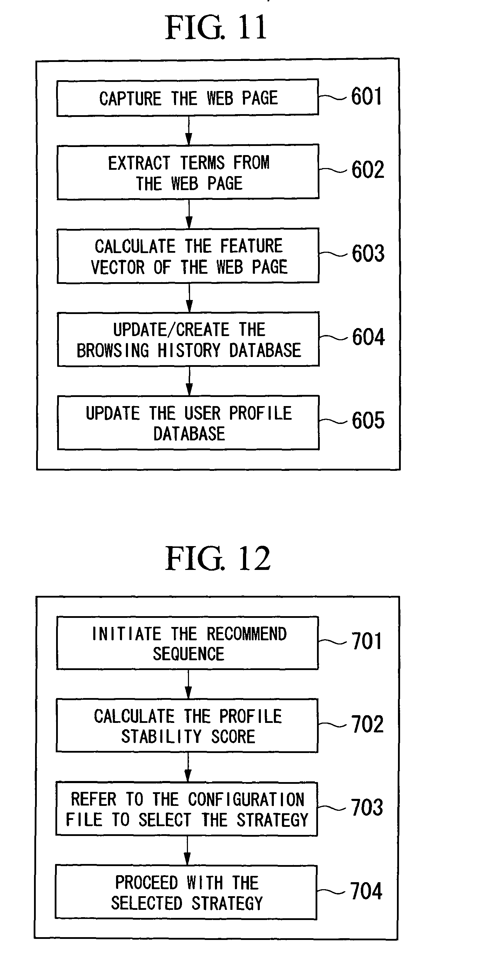

The management agent 101 updates the long-term profile database 103, the short-term profile database 104, and the browsing history database 102 when the user 107 browses a web page from the World Wide Web 106. The update sequence is illustrated in Figure 11.

Step 601: The user browses a web page, and the web page is captured by the management agent 101.

Step 602: The management agent 101 analyzes the text of the web page, and breaks the text into individual terms. This process can be performed using the various prior art called "Part of Speech Taggers". Some examples of such prior art are:

- Tree Tagger: H. Schmid, "Probabilistic Part-of-Speech Tagging Using Decision Trees", In Proc. of International Conference on New Methods in Language Processing, 1994 (http://www.ims.uni-stuttgart.de/projekte/corplex/Tree-Tagger/DecisionTreeTagger.html)
- Standard POS tagger: K. Toutanova, D. Klein, C. Manning, and Y. Singer, "Feature-Rich Part-of-Speech Tagging with a Cyclic Dependency Network", in Proc. of Human Language Technology Conference/North American Chapter of the Association for Computational Linguistics (HLT-NAACL), 2003 (http://n1p.stanford.edu/software/tagger.shtml)
- YamCha: T. Kudo and Y. Matsumoto, Fast Methods for Kernel-Based Text Analysis, in Proc. of the 41st Annual Meeting of the Association for Computational Linguistics (ACL2003), 2003 (http://chasen.org/~taku/software/yamcha/)

After the terms are extracted, the system may discard terms that belong to "stop words". The "stop words" are commonly used terms (like "above", "get", and "about") that are not appropriate to be used for user profile construction.

Step 603: For each term captured in step 602, calculate the feature score with equation (1):

$$w_i = tf_i \cdot idf_i$$

$$tf_i = f_i \Big/ \sum\nolimits_{k=1}^{M} f_k \,, idf_i = \log N \big/ df_i \qquad \text{equation (1)}$$

where:

$w_i$ : The feature score for term $i$

$f_i$ : The number of times the term $i$ appeared in the web page

$M$ : The total number of words captured from the web page

$N$ : The total web page in the WWW

$df_i$ : The number of pages in the WWW with at least one occurrence of the term $i$

Equation (1) is known as the "tf-idf" method. The method is based on the assumption that the terms that 1) occur multiple times in the page and 2) rarely occur in other pages, best describe the page in question.

The result of the feature score calculation is summarized as the following feature vector:

$$\vec{w} = (w_1, w_2, \cdots, w_M)$$

Step 604: The management agent 101 updates its browsing history database 102.

- The management agent 101 checks the browsing history table 201 managed by the browsing history database 102 to see if the corresponding page is already listed in the browsing history table 201.
- If the page is not listed in the browsing history table 201, then the management agent 101 creates a new record with the following information and inserts it into the browsing history database 201:
- "The web page URL" for the URL 202
- "The time when the user 106 browsed the web page" for the time 203
- "The feature vector calculated in step 603" for the feature vector 204
- If the page is already listed in the browsing history table 201, then the management agent 101 updates the corresponding record instead of creating a new record.

Step 605: The management agent 101 updates its long-term profile database 103 and short-term profile database 104.

- The management agent 101 checks the time when the page was browsed, and locates the long-term user profile $ul$ and the short-term user profile $us$ having the corresponding timeslot 302 and 402, respectively. For example, the second records in the long-term profile table 301 and the short-term profile table 401 will be chosen as $\vec{ul}$ and $\vec{us}$, respectively, if the web page is browsed at 13:00.
- The management agent 101 calculates the elapsed time since the last page view was made by the user 107. This is done by consulting the browsing history database 102, by finding the two most recent records in the browsing history t→e 201 → by calculating the time difference between the two time information stored in the time 203.
- Update $ul$ and $us$ with equation (2):

$$\vec{ul}_{new} = e^{\frac{-\ln 2}{hl_l} \cdot elapsed} \cdot \vec{ul}_{old} + \vec{w}$$

$$\vec{us}_{new} = e^{\frac{-\ln 2}{hl_s} \cdot elapsed} \cdot \vec{us}_{old} + \vec{w} \qquad \text{equation (2)}$$

where:

$\vec{ul}_{new}, \vec{us}_{new}$: The long-term and short-term user profile after the update

$\vec{ul}_{old}, \vec{us}_{old}$: The long-term and short-term user profile before the update

$elapsed$: The elapsed time

$hl_l, hl_s$: The "half-life" for the long-term and short-term user profile

$\vec{w}$: The feature vector of the page just browsed (calculated in Step 603)

The "half-life" is defined to control how fast the user profile is "decayed". To reflect the most recent user web browsing tendency, old user profile data should be gradually "forgotten" by the system so as to retain an up-to-date user profile. The half-life defines the time when the effect of the user profile data is halved (note that

$$e^{\frac{-\ln 2}{hl}\cdot hl} = e^{-\ln 2} = 0.5)$$ , so the system can control the rate of "forgetting" old user profile data. Here, the long-term

user profile $\vec{ul}$ and the short-term user profile *us* use different half-life settings *(hl$_l$ and hl$_s$, respectively)*. Since the

long-term user profile $\vec{ul}$ summarized the user web browse preferences in a term longer than that of the short-term user profile *us* , *hl$_l$* and *hl$_s$* should be set while fulfilling the following condition:

$$hl_l > hl_s$$

For instance, *hl$_l$ = 7days* and *hl$_s$ = 2day* may be used to constitute the long-term user profile with monitoring on a weekly basis and the short-term user profile with monitoring on a daily basis.

Note that the dimensions of (or the number of terms in) $\vec{ul}$ and $\vec{us}$ will grow explosively as the number of pages browsed by users increase. To alleviate this problem, the system can store the top N elements (the top 50, for example) with high feature scores and discard the rest. Alternatively, the system can have a threshold value, and only store those elements with scores higher than this threshold value.

Using the user profiles $\vec{ul}$ and $\vec{us}$ , the system will decide the strategy for making the page recommendations for the corresponding user 107. The strategy selection sequence is described in Figure 12.
Step 701: The system initiates its web recommendation sequence. The trigger can be achieved in various ways, for example, the user 107 may notify the management agent 101 to start the web recommendation sequence, or the management agent 101 may start the sequence by itself with a preset configuration (e.g. using its preset timer)
Step 702: The management agent 101 consults the long-term profile database 103 and the short-term profile database 104 to extract the appropriate long-term user profile *ul* and the short-term user profile $\vec{us}$ . Then the management agent 101 (stability score calculating part) calculates the user profile stability score.

- The management agent 101 checks the current time and locates the appropriate long-term user profile $\vec{ul}$ and

the short-term user profile $\vec{us}$ with the corresponding time slot 302 and 402. For example, the second user profile record in the long-term profile table 301 and the second user profile record in the short-term profile table 401 both correspond to a target time slot and will be chosen as $\vec{ul}$ and $\vec{us}$ respectively if the current time is 13:00. A target time slot is a time slot as described above and the management agent 101 recommends web pages to the user based on the target time slot. Howev the target time slot is not nec rily associated with the current time.
- Using the extracted long-term profile $\vec{ul}$ and short-term user profile $\vec{us}$ , , calculate the user profile stability score with equation (3):

$$stability\ score = sim(\vec{ul}, \vec{us})$$

$$= \frac{ul_1 \cdot us_1 + ul_2 \cdot us_2 + \cdots + ul_n \cdot us_n}{\sqrt{ul_1^2 + ul_2^2 + \cdots + ul_n^2} \cdot \sqrt{us_1^2 + us_2^2 + \cdots + us_n^2}} \qquad \text{equation (3)}$$

where:

$$\begin{cases} \vec{ul} = (ul_1, ul_2, \cdots, ul_n) : \text{Long-term profile} \\ \vec{us} = (us_1, us_2, \cdots, us_n) : \text{Short-term profile} \end{cases}$$

Equation (3) is calculating the similarity of two vectors ($\vec{ul}$ and $\vec{us}$) with the cosine scoring method. The similarity score will be in the range of 0.0-1.0; If the long-term profile $ul$ and the short-term profile $us$ show the same tendency (meaning that the user profile at the current time slot is "stable"), then the stability score will be high. On the other hand, the stability score will be low if two user profiles denote different tendencies (meaning that the user profile at the current time slot is "unstable")

Step 703: Using the user stability score calculated in step 702, the system (recommendation strategy decision part) selects the appropriate web page recommendation strategy. This is performed by consulting the configuration file 105 and by referring to the configuration table 501. The system compares the stability score with the score range condition 502 and selects the appropriate strategy defined in the strategy definition 503. For example, the system will choose content-based filtering if the stability score is above 0.70, collaborative filtering if the score is between 0.30 and 0.70 if the configuration table is set as shown in Figure 10.

Step 704: The system (recommendation part) proceeds with the web page recommendation process chosen in step 703. The details of the actual web page recommendation process can vary; various prior art in the fields can be applied to achieve such tasks. For example,

- If the selected strategy is content-based filtering, then the system can receive newly updated web pages from the WWW 106 through an RSS feed for example, calculate the feature vector for each page (using step 601 - step 603), calculate the similarity of each web page with the user profile, and recommend the web pages that exhibit high similarity with the user profile. The similarity of a web page with the user profile can be calculated with the following equation:

$$similarity\ score = sim(\vec{us}, \vec{w})$$

$$= \frac{us_1 \cdot w_1 + us_2 \cdot w_2 + \cdots + us_n \cdot w_n}{\sqrt{us_1^2 + us_2^2 + \cdots + us_n^2} \cdot \sqrt{w_1^2 + w_2^2 + \cdots + w_n^2}} \qquad \text{equation (4)}$$

where:

$$\begin{cases} \vec{us} = (us_1, us_2, \cdots, us_n) : \text{Short-term profile of the user} \\ \vec{w} = (w_1, w_2, \cdots, w_n) : \text{feature vector of the web page} \end{cases}$$

- If the selected strategy is collaborative filtering, then the management agent 101 can find another user's management agent 101' with a similar user profile, extract a set of web pages managed by the browsing history DB 102' of the management agent 101', and select the pages to recommend from this set. When finding the management agent 101 with the similar user profile, the following equation can be used:

$$similarity\ score = sim(\vec{us}, \vec{us'})$$

$$= \frac{us_1 \cdot us'_1 + us_2 \cdot us'_2 + \cdots + us_n \cdot us'_n}{\sqrt{us_1{}^2 + us_2{}^2 + \cdots + us_n{}^2} \cdot \sqrt{us'_1{}^2 + us'_2{}^2 + \cdots + us'_n{}^2}} \qquad \text{equation (5)}$$

where:

$$\begin{cases} \vec{us} = (us_1, us_2, \cdots, .us_n): \text{Short-term profile of user A} \\ \vec{us'} = (us'_1, us'_2, \cdots, .us'_n): \text{Short-term profile of user B} \end{cases}$$

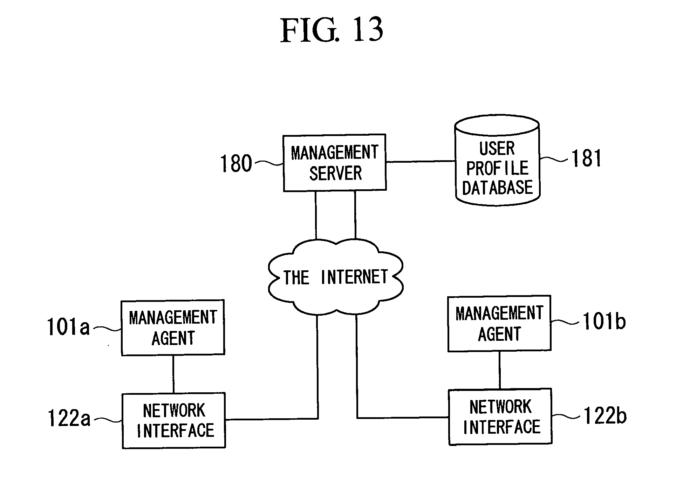

Figure 13 shows how management agents of multiple users collaborate. As shown in the figure, a management agent 101a present in the client machine of a certain user and a management agent 101b present in the client machine of another user each communicate with a management server 180 via the Internet. The management server 180 has a user profile database 181.

One of the services provided by the management server 180 is registration of user profiles. A management agent on the client side uses this service by sending its own user ID and its own user profile information to the management server 180. The management server 180 stores the received user ID and the user profile of this user in the user profile database 181 so that they correspond to each other. Thus, many user profiles can be stored in the user profile database 181.

Another service provided by the management server 180 is finding users having a similar profile. For example, the management agent 101a can request that user having a similar profile be found by sending its own profile information to the management server 180. The management server 180, which receives this request, discovers the management agent 101b, which is the owner of a similar profile to the profile sent from the management agent 101a, by searching the user profile database 181 and calculating a similarity score between two users using equation (5). The user ID corresponding to the management agent 101b is then sent to the management agent 101a. The management agents 101a and 101b can then exchange information such as each other's browsing history by directly communicating with each other history. The above-mentioned collaborative filtering can be realized by this information exchange scheme.

[Second Embodiment]

In the second embodiment of the present invention, the web page recommendation system does not carry out time slotting. The long-term profile table shown in Figure 8 and the short-term profile table shown in Figure 9 have a time slot 302 and 402, respectively. A feature vector corresponding to each vector is maintained. With respect to this, the long-term profile table and the short-term profile table in the second embodiment do not have a time slot. The long-term profile table and the short term profile table each maintain a single feature vector. A stability score calculating part calculates a stability score by comparing these single feature vectors in the long-term and short-term profiles with each other. The process after calculation of the stability score is the same as the process in the first embodiment.

In the situation "user's profile does not depend on the time period of the day" or the situation "want web page recommendation to be carried out by averaging user's profile during a day", database structure and processing can be simplified by using this method without time slotting.

The present invention has been illustrated and explained referring to the above-mentioned preferred embodiments. However, as understood by a person skilled in this field, modifications and improvements can be made as long as they do not depart from the scope of the present invention.

For example, although in the above-mentioned embodiments the entire web recommendation system is present in the client machine, the function of that entirety or a part thereof may be placed on the server apparatus side. For example, a plurality of user browsing history databases 102, long-term profile databases 103, and short-term profile databases 104 may be placed in a single server apparatus and "a management agent 101 in a client machine of each user may read and write to these databases 102, 103, and 104 through the Internet". A comparative process between user profiles and a calculating process not carried out in a large amount accompanying this can be accomplished with a small communications traffic by managing all user profiles on a single server apparatus. On the other hand, when each user profile is managed on each client machine, access to the data of these user profiles files can be done with a short response time. These are tradeoffs and may be arbitrarily selecting according to the application. From a different viewpoint, when each user profile is managed on a client machine, personal data such as profile and browsing history can be restricted to the user. Thus, this is suitable for the preservation of user privacy.

Also, for example, in the above-mentioned embodiments, although each web page recommendation system receives newly updated web pages from the WWW and calculates the feature vector for each page for the purpose of content-based filtering, a single server may have the feature vectors for all the web pages on the Internet. When doing so, the web pages may be collected using a search engine robot technique. Thus, the total volume of calculation in order to calculate the feature vectors can be substantially reduced.

Furthermore, the medium for recoding the program is not limited to a HDD. For example a fixed or portable computer readable reading medium such as a CD-ROM, a CD-R, a DVD-ROM, a DVD-R, or a DVD-RAM can be used. Also, a program may be offered by a signal on a communication line.

INDUSTRIAL APPLICABILITY

The present invention can be used to recommend pages appropriate for a user from web pages accessible from the Internet or an intranet.

**Claims**

1. A web page recommendation system comprising:

a browsing history database (102) which contains information (202) related to the web pages that a user browsed;
a stability score calculating part (101) arranged for calculating stability scores that represent the stability of the user's web page browsing tendencies, based on the information in the browsing history database;
a recommendation strategy decision part (101) arranged for deciding a recommendation strategy based on a calculated stability score; and
a recommendation part (101) arranged for using the decided recommendation strategy in order to recommend web pages to the user.

2. A web page recommendation system according to claim 1 further comprising a profile generation part which generates long-term and short-term profiles that represent the user's web page browsing tendencies in the long term and in the short term, respectively, wherein the stability score calculating part calculates the stability score by comparing the generated long-term profile and the short-term profile with each other.

3. A web page recommendation system according to claims 1 to 2, wherein
the browsing history database (102) contains information related to the web page in association with a time (203) when the user browsed the web page,
the stability score calculating part calculates the stability scores for time slots (302, 402), and
the recommendation part decides the web pages recommended to the user using the selected recommendation strategy according to the time slots.

4. A web page recommendation system according to claims 1 to 3, wherein when the stability score is relatively high, the recommendation decision part decides to use a content-based filtering strategy, which recommends web pages which best match the user's profile, and when the stability score is relatively low, the recommendation strategy decision part decides to use a collaborative filtering strategy, which recommends web pages browsed by other user's having a similar profile to the user's profile.

5. A web page recommendation system according to claim 2, wherein the generated long-term and short-term profiles are stored in a client machine.

6. A web page recommendation system according to claim 2, wherein multiple users' long-term and short-term profiles are stored in a server apparatus.

7. A web page recommendation method comprising:

a stability score calculating step (702) for calculating a stability score that represents the stability of a user's web page browsing tendencies according to information related to the web pages that the user browsed, a recommendation strategy decision step (703) for deciding a recommendation strategy based on the calculated stability score, and a web page recommendation step (704) for using the decided recommendation strategy in order to recommend web pages to the user.

8. A web page recommendation method according to claim 7, wherein
stability scores for a plurality of time slots are calculated in the stability score calculating step and
the web page recommendation strategy is decided by using the stability score corresponding to a target time slot in the recommendation strategy decision step.

9. A computer program including:

a stability score calculating step (702) for calculating a stability score that represents the stability of a user's web page browsing tendencies according to information related to the web pages that the user browsed, a recommendation strategy decision step (703) for deciding a recommendation strategy based on the calculated stability score, and a web page recommendation step (704) for using the decided recommendation strategy in order to recommend web pages to the user.

10. A computer program according to claim 9, wherein
stability scores for a plurality of time slots are calculated in the stability score calculating step and
the web page recommendation strategy is decided by using the stability score corresponding to a target time slot in the recommendation strategy decision step.

# FIG. 1

9:00      12:00      15:00     TIME AXIS

ALWAYS CHECKING TELECOM-RELATED NEWS

SEARCHING RESTAURANTS IN GENERAL DURING LUNCHTIME

CONTENT-BASED FILTERING IS PREFERABLE

COLLABORATIVE FILTERING TECHNIQUE IS MORE RELEVANT

# FIG. 2

Day1

Day2

Day n-1

Day n

LONG-TERM PROFILE($P_l$)

THE PROFILE SUMMARIZING THE FEATURES OF THE BROWSED WEB PAGES OVER A LONG DURATION

SHORT-TERM PROFILE($P_s$)

THE PROFILE SUMMARIZING THE FEATURES OF RECENTLY BROWSED WEB PAGES

# FIG. 3

# FIG. 4

## FIG. 5

121 — WEB BROWSER

101 — MANAGEMENT AGENT

READ/WRITE → DATABASES

103

104

102 — BROWSING HISTORY DB

LONG-TERM PROFILE DB

SHORT-TERM PROFILE DB

122 — NETWORK INTERFACE → WWW

## FIG. 6

151 — CPU

152 — MAIN MEMORY (RAM)

DISPLAY (CRT/LCD etc.) — 154

VIDEO INTERFACE — 153

150 — BUS

155 — INTERFACE

NETWORK INTERFACE — 157

156 — HARD DISK DRIVE
-PROGRAMS
-DATABASES

NETWORK DEVICE

158

OPTICAL FIBER

160

161

THE INTERNET
ISP'S NETWORK

# FIG. 7

201

**BROWSING HISTORY TABLE**

| URL | TIME | FEATURE VECTOR |
|-----|------|----------------|
| ⋮ | ⋮ | |
| http://www.... | 2006.01.12 11:42 | (restaurant, 1.5), (japanese, 1.3), (cheap, 1.2), (casual, 0.5),... |
| http://www.... | 2006.01.12 11:51 | (restaurant, 1.3), (italian, 0.9), (pizza, 0.6), (formal, 0.2),... |
| ⋮ | ⋮ | |

202　203　204

205　206

# FIG. 8

301

**LONG-TERM PROFILE TABLE**

| TIME SLOT | FEATURE VECTOR |
|-----------|----------------|
| 07:00-12:00 | (INTERNET, 2.3), (SOCCER, 1.4),... |
| 12:00-17:00 | ⋮ |
| 17:00-07:00 | ⋮ |

302　303

304　305

# FIG. 9

401

**SHORT-TERM PROFILE TABLE**

402 403

| TIME SLOT | FEATURE VECTOR |
|-----------|----------------|
| 07:00-12:00 | (RESTAURANT, 1.5), (FRENCH, 0.7),... |
| 12:00-17:00 | ⋮ |
| 17:00-07:00 | ⋮ |

404 405

# FIG. 10

501

**CONFIGURATION TABLE**

502 503

| SCORE RANGE | STRATEGY TO BE USED |
|-------------|---------------------|
| $0.70 \leq s$ | CONTENT-BASE FILTERING |
| $0.30 \leq s < 0.70$ | COLLABORATIVE FILTERING |
| $s < 0.30$ | NONE |

# FIG. 11

CAPTURE THE WEB PAGE ~601

EXTRACT TERMS FROM THE WEB PAGE ~602

CALCULATE THE FEATURE VECTOR OF THE WEB PAGE ~603

UPDATE/CREATE THE BROWSING HISTORY DATABASE ~604

UPDATE THE USER PROFILE DATABASE ~605

# FIG. 12

INITIATE THE RECOMMEND SEQUENCE ~701

CALCULATE THE PROFILE STABILITY SCORE ~702

REFER TO THE CONFIGURATION FILE TO SELECT THE STRATEGY ~703

PROCEED WITH THE SELECTED STRATEGY ~704

# FIG. 13

180 — MANAGEMENT SERVER

USER PROFILE DATABASE — 181

THE INTERNET

101a — MANAGEMENT AGENT

MANAGEMENT AGENT — 101b

122a — NETWORK INTERFACE

NETWORK INTERFACE — 122b

**European Patent Office**

## EUROPEAN SEARCH REPORT

Application Number

EP 06 29 1086

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BURKE R: "Hybrid Recommender Systems: Survey and Experiments" JOURNAL ARTICLE: USER MODELING AND USER-ADAPTED INTERACTION, [Online] 2002, XP002403156 ISSN: 0924-1868 Retrieved from the Internet: URL:http://w5.cs.uni-sb.de/~dominik/um/pap ers/2-adaptive-webdienste/burke2002-hybrid -recommender-systems.pdf> [retrieved on 2006-11-07] * section "2. Comparing Recommendation Techniques" * * section "3.2. Switching" * ----- | 1-10 | INV. G06F17/30 |
| Y | US 6 839 680 B1 (LIU ALBERT M [US] ET AL) 4 January 2005 (2005-01-04) * abstract * * column 2, line 14 - column 5, line 43 * ----- | 1-10 | |
| A | DIAS TORRES JUNIOR R: "Combining Collaborative and Content-based Filtering to Recommend Research Papers" INTERNET PUBLICATION, [Online] January 2004 (2004-01), XP002403157 Retrieved from the Internet: URL:http://www.inf.ufrgs.br/gpesquisa/bdi/ publicacoes/files/MastersDissertationRober toTorres.pdf> [retrieved on 2006-11-07] * section "2. Recommender Systems and Related Work" * ----- -/-- | 1-10 | **TECHNICAL FIELDS SEARCHED (IPC)** G06F |

The present search report has been drawn up for all claims

| Place of search | Date of completion of the search | Examiner |
|---|---|---|
| Berlin | 9 November 2006 | Siodmok, Wojciech |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

| European Patent Office | EUROPEAN SEARCH REPORT | Application Number<br>EP 06 29 1086 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MIN S-H ET AL: "Detection of the customer time-variant pattern for improving recommender systems" EXPERT SYSTEMS WITH APPLICATIONS, OXFORD, GB, vol. 28, no. 2, February 2005 (2005-02), pages 189-199, XP004705900 ISSN: 0957-4174 * abstract * | 1-10 | |
| | | | **TECHNICAL FIELDS SEARCHED (IPC)** |

The present search report has been drawn up for all claims

| Place of search | Date of completion of the search | Examiner |
|---|---|---|
| Berlin | 9 November 2006 | Siodmok, Wojciech |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 873 657 A1

## ANNEX TO THE EUROPEAN SEARCH REPORT
## ON EUROPEAN PATENT APPLICATION NO.

EP 06 29 1086

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2006

| Patent document cited in search report | Publication date | Patent family member(s) | Publication date |
|---|---|---|---|
| US 6839680 B1 | 04-01-2005 | JP 2001142907 A | 25-05-2001 |

For more details about this annex : see Official Journal of the European Patent Office, No. 12/82

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1524611 A2

- CA 2265292

**Non-patent literature cited in the description**

- **K. TOUTANOVA ; D. KLEIN ; C. MANNING ; Y. SINGER.** Feature-Rich Part-of-Speech Tagging with a Cyclic Dependency Network. *Proc. of Human Language Technology Conference/North American Chapter of the Association for Computational Linguistics,* 2003

- **T. KUDO ; Y. MATSUMOTO.** Fast Methods for Kernel-Based Text Analysis. *Proc. of the 41st Annual Meeting of the Association for Computational Linguistics,* 2003, http://chasen.org/~taku/software/yamcha